# EUROPEAN PATENT APPLICATION

(11) **EP 2 091 232 A2**
(43) Date of publication of application: **19.08.2009**
(21) Application number: 09152612.9
(22) Date of filing: 11.02.2009
(51) Int. Cl.: H04N 5/232, H04N 101/00

(54) **Camera**

(30) Priority: 12.02.2008 JP 2008030693
(71) Applicant: Nikon Corporation, Tokyo 100-8331 (JP)
(72) Inventor: Muramatsu, Katsuhisa c/o Nikon Corporation Intel. Property Headquarter, Tokyo 100-8331 (JP); Fujii, Bungo c/o Nikon Corporation Intel. Property Headquarter, Tokyo 100-8331 (JP); Yoshizawa, Daisuke c/o Nikon Corporation Intel. Property Headquarter, Tokyo 100-8331 (JP); Funado, Tarou c/o Nikon Corporation Intel. Property Headquarter, Tokyo 100-8331 (JP); Yuza, Mariko c/o Nikon Corporation Intel. Property Headquarter, Tokyo 100-8331 (JP); Sekiya, Takafumi c/o Nikon Corporation Intel. Property Headquarter, Tokyo 100-8331 (JP); Fukazawa, Takashi c/o Nikon Corporation Intel. Property Headquarter, Tokyo 100-8331 (JP)
(74) Representative: Walaski, Jan Filip

(57) **Abstract**

A camera includes: an image-capturing means that captures an image of a photographic subject created by a photographic lens, creates an image to be recorded when a release start command is issued, and creates a through image for composition confirmation before starting of the release; a body in which the image-capturing means is disposed; a tilt angle detection means that detects the tilt angle of the body about the optical axis of the photographic lens; a composite image creation means that creates and outputs a composite image for display for displaying the through image and the image to be recorded in a single screen; and a display means that displays the composite image for display. The composite image creation means creates the composite image for display so that the photographic subject that appears in the image to be recorded is displayed upon the display means as being approximately erect.

## Description

The disclosure of the following priority application is herein incorporated by reference: Japanese Patent Application No. 2008-030693 filed February 12, 2008.

The present invention relates to a camera that can display a plurality of images that have been obtained by photography as a combination.

A camera is per se known that is endowed with the function of, during photography, arranging a plurality of images and combining them into a single image. With the camera, the images that have been obtained by photography are laid out sequentially, in the order in which they were photographed, in a display frame that is set in advance.

When photography is performed with the above described prior art camera being oriented both vertically and also horizontally, then the images that are obtained are laid out upright and sideways just as they are.

According to the first aspect of the present invention, a camera comprises: an image-capturing means that captures an image of a photographic subject created by a photographic lens, creates an image to be recorded when a release start command is issued, and creates a through image for composition confirmation before starting of the release; a body in which the image-capturing means is disposed; a tilt angle detection means that detects the tilt angle of the body about the optical axis of the photographic lens; a composite image creation means that creates and outputs a composite image for display for displaying the through image and the image to be recorded in a single screen; and a displaymeans that displays the composite image for display. The composite image creation means creates the composite image for display so that the photographic subject that appears in the image to be recorded is displayed upon the display means as being approximately erect.

According to the second aspect of the present invention, in the camera according to the first aspect, it is preferred that the composite image creation means creates the composite image for display so that the orientation of a display frame for the through image that is displayed upon the display means does not change, having no relationship with the tilt angle, with respect to the display means.

According to the third aspect of the present invention, in the camera according to the first or the second aspect, it is preferred that the composite image creation means creates the composite image for display on the basis of the tilt angle, so that the through image of the photographic subjects is displayed upon the display means as being approximately erect.

According to the fourth aspect of the present invention, in the camera according to any one of the first through third aspects, it is preferred that the composite image creation means creates a single composite image for recording on the basis of a plurality of images to be recorded, each of which is the image to be recorded, in which the photographic subj ects appear as being approximately erect, and records data of the composite image for recording upon a composite image data recording device .

According to the fifth aspect of the present invention, in the camera according to the fourth aspect, it is preferred that the camera further comprises: a recording medium upon which data of the image to be recorded is recorded; and a recording control means that controls recording of the data of the image to be recorded upon the recording medium, and controls recording of the data of the composite image for recording upon the composite image data recording device. The recording control means does not delete the data of the image to be recorded from the recording medium, when the data of the composite image for recording is recorded upon the composite image data recording device.

According to the sixth aspect of the present invention, in the camera according to the fourth aspect, it is preferred that the camera further comprises: a recording medium upon which data of the image to be recorded is recorded; and a recording control means that controls recording of the data of the image to be recorded upon the recording medium, and controls recording of the data of the composite image for recording upon the composite image data recording device. The recording control means deletes the data of the images to be recorded from the recording medium, when the data of the composite image for recording is recorded upon the composite image data recording device.

According to the seventh aspect of the present invention, in the camera according to any one of the fourth through sixth aspects, it is preferred that the camera further comprises a layout alteration means that alters the layout of the composite image for recording. The composite image creation means records the data of the composite image for recording upon the composite image data recording device, with its layout altered by the layout alteration means.

### BRIEF DESCRIPTION OF THE DRAWINGS

Fig. 1 is a perspective view showing a camera body and a photographic lens that is to be installed to the camera body;
Fig. 2 is a block diagram for explanation of the structure of a control circuit;
Figs. 3A and 3B are figures for explanation of the attitude of the camera body;
Figs. 4A, 4B, and 4C are figures showing examples of screens that are displayed upon a display device of a first embodiment;
Figs. 5A and 5B are figures showing examples of screens that are displayed upon this display device of the first embodiment;
Figs. 6A and 6B are figures showing examples of screens that are displayed upon this display device of the first embodiment;
Fig. 7 is a flow chart for composite image creation processing executed by a CPU;
Figs. 8A, 8B, and 8C are figures showing examples of screens that are displayed upon a display device of a second embodiment;
Figs. 9A and 9B are figures showing examples of screens that are displayed upon this display device of the second embodiment;
Figs. 10A and 10B are figures showing examples of screens that are displayed upon this display device of the second embodiment; and
Fig. 11 is a flow chart for composite image creation processing executed by a CPU.

### DESCRIPTION OF PREFERRED EMBODIMENTS

### --- First Embodiment ---

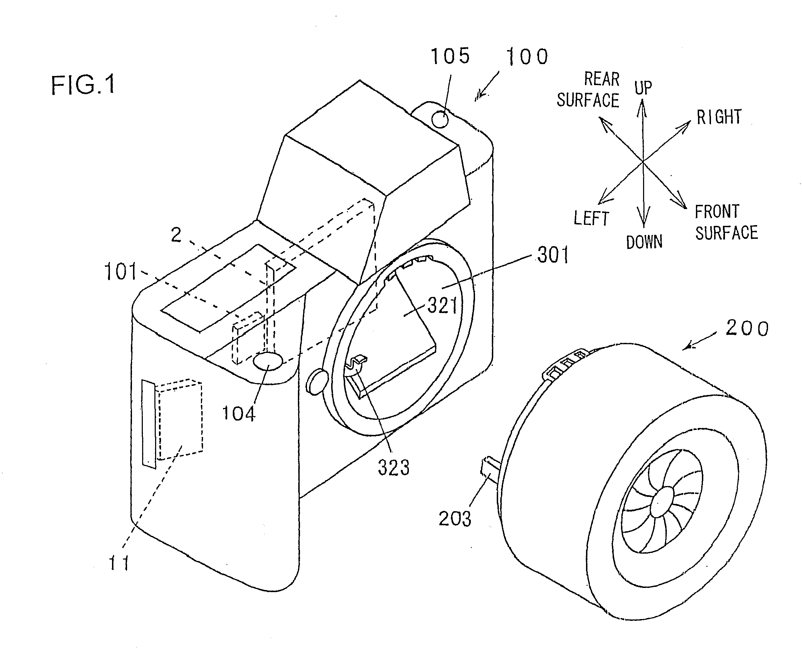

A first embodiment of the camera according to the present invention shall be explained with reference to Figs. 1 through 7. Fig. 1 is a perspective view showing a camera body 100 of a single lens reflex type camera to which the present invention has been applied, and a photographic lens 200 that can be installed to this camera body 200. The camera body 100 is provided with a release button 104, a confirm button 105, an image sensor 2 that captures an image of a photographic subject, and a control circuit 101 that controls various sections of the camera body 100. And a recording medium 11 is fitted to the camera body 100.

301 denotes the photographic optical path, along which the light from the photographic subject is conducted to the image sensor 2. When the photographic lens 200 is installed to the camera body 100, a lens side aperture lever 203 and a camera side aperture operating level 323 are contacted together. By driving the camera side aperture operating lever 323, the lens side aperture lever 203 controls the aperture to a predetermined aperture value. And 321 is a main mirror.

The image sensor 2 maybe, for example, a CCD image sensor. This image sensor 2 captures an image created by the light from the photographic subject that has passed through the photographic lens 200, and outputs an image capture signal to the control circuit 101. The recording medium 11 is fittable to and detachable from the camera body 100 and may be, for example, a memory card or the like, and stores image data upon which predetermined processing has been performed by the control circuit 101, as shall be described hereinafter. In this embodiment, the surface of the camera body 100 as seen from the direction in which the photographic lens 200 is attached shall be termed its front surface, and the surface of the camera body 100 as seen from the direction in which the image sensor 2 is provided shall be termed its rear surface. And the upwards, downwards, leftwards, and rightwards directions of the camera body 100 are specified as shown in the figures.

The confirm button 105 is a button that is pressed when confirming the layout of a composite image, as shall be described hereinafter. The details of the calculations that are performed when the confirm button 105 is pressed shall also be described hereinafter in detail.

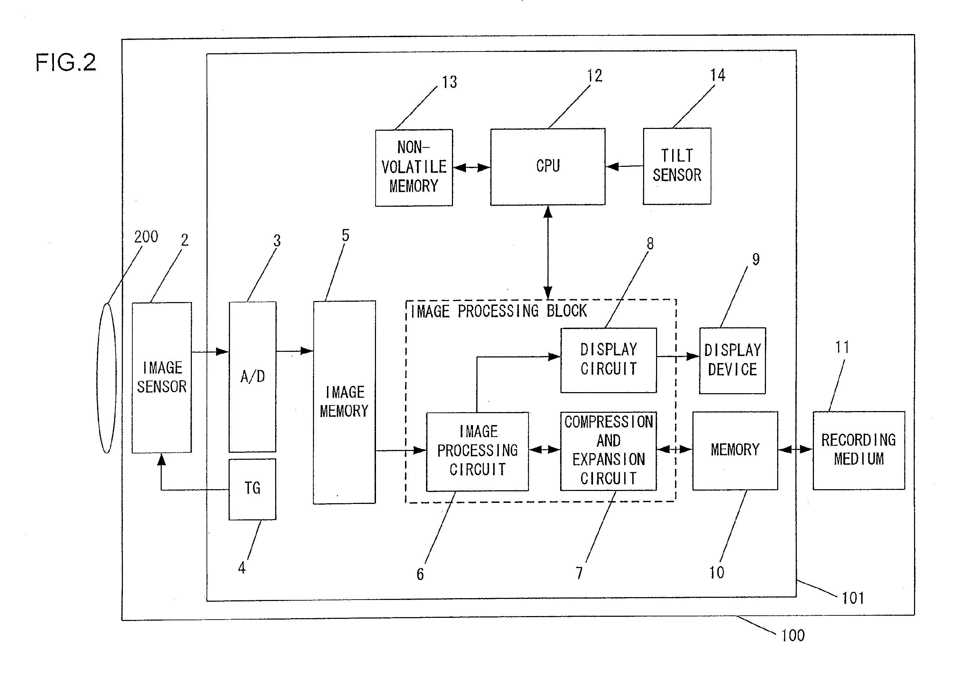

Fig. 2 is a block diagram for explanation of the structure of the control circuit 101. This control circuit 101 includes an A/D conversion circuit 3, a timing generator 4, and an image memory 5. And, moreover, the control circuit 101 includes an image processing circuit 6, a compression and expansion circuit 7, a display circuit 8, a display device 9, a memory 10, a CPU 12, a non-volatile memory 13, and a tilt sensor 14.

The A/D conversion circuit 3 converts the analog image capture signal to a digital signal. The image sensor 2 and the A/D conversion circuit 3 are driven at predetermined operational timings by a drive signal outputted by the timing generator 4. The image memory 5 is a memory that temporarily stores the image data of the image of the photographic subject that has been captured by the image sensor 2 and that has been converted into a digital signal by the A/D conversion circuit 3.

The image processing circuit 6 performs image processing upon this image data after digital conversion, for example white balance processing and so on. The compression and expansion circuit 7 performs compression processing in which the image data is compressed in a predetermined format, after having been subjected to image processing by the image processing circuit 6. Moreover, the compression and expansion circuit 7 also performs decompression processing in which image data that has been compressed, and that is recorded upon the recording medium 11, is expanded.

The display circuit 8 is a circuit that performs processing for displaying upon the display device 9 various types of information related to the images that are captured and related to a composite image that shall be described hereinafter, and also processing related to the camera body 100 and to the photographic lens 200 that is fitted thereto. The image processing circuit 6, the compression and expansion circuit 7, and the display circuit 8 constitute an image processing block.

The display device 9 maybe, for example, a liquid crystal display device, and displays images that have been processed by the display circuit 8. This display device 9 is arranged so that its display surface can be visually checked from the side of the rear surface of the camera body 100. And the memory 10 is a memory that temporarily stores image data that has been subjected to compression processing by the compression and expansion circuit 7.

The CPU 12 is a control circuit that performs control of the various sections of the camera body 100, and inputs signals outputted from these various sections, performs predetermined calculations thereupon, and outputs control signals to the various sections on the basis of the results of these calculations. Moreover, the CPU 12 creates composite images that shall be described hereinafter. The non-volatile memory 13 stores various set values. The tilt sensor 14 is an angular sensor that is centered upon the incident optical axis of the photographic lens 200, for detecting the tilt angle θ of the camera body 100. In the following explanation, the tilt angle of the camera body 100 as centered around the incident optical axis of the photographic lens 200 shall simplybe termed the "tilt angle θ of the camera body 100" or the "tilt angle θ".

With the camera body 100 having this type of structure, when a power supply switch not shown in the figures is turned ON and a release start command is issued by pressing the release button 104, along with the main mirror 321 retracting, an appropriate shutter speed and aperture value are determined by the CPU 12, and an image of the photographic subject is captured by the image sensor 2. The analog capture signal of the image of the photographic subject that has been captured by the image sensor 2 is converted into a digital signal by the A/D conversion circuit 3, and image processing is performed thereupon by the image processing circuit 6. The image data that has thus been processed by the image processing circuit 6 is recorded upon the recording medium 11, after compression processing has been performed thereupon by the compression and expansion circuit 7 according to, for example, the JPEG format. When the image of the photographic subject is captured by the image sensor 2, along with the main mirror 321 being recovered, an elastic member that controls amechanical shutter not shown in the figures is put under tension, the aperture of the photographic lens 200 is opened, and the camera body 100 and the photographic lens 200 are returned to their states before the start of shutter release.

In this embodiment, the image data that has been subjected to compression processing in the JPEG format, and EXIF data, are recorded upon the recording medium 11 according to the JEITA Standard EXIF Specification. The EXIF data includes various types of information about the image, appended to the image file according to the EXIF standard. The area field in which the EXIF data is recorded includes: a region in which are recorded various types of information related to the image, such as the vertical or horizontal orientation of the camera body 100 when the image was captured and its resolution and the like; a region in which the date and time of photography are recorded; a region in which various types of photographic condition such as the exposure time and the aperture and so on are recorded; a arbitrary region that each vendor (maker) can use as is desirable; and a region that the user can utilize as is desirable. In this embodiment, as shall be described hereinafter, information related to the tilt angle of the camera body 100 is recorded in the arbitrary region.

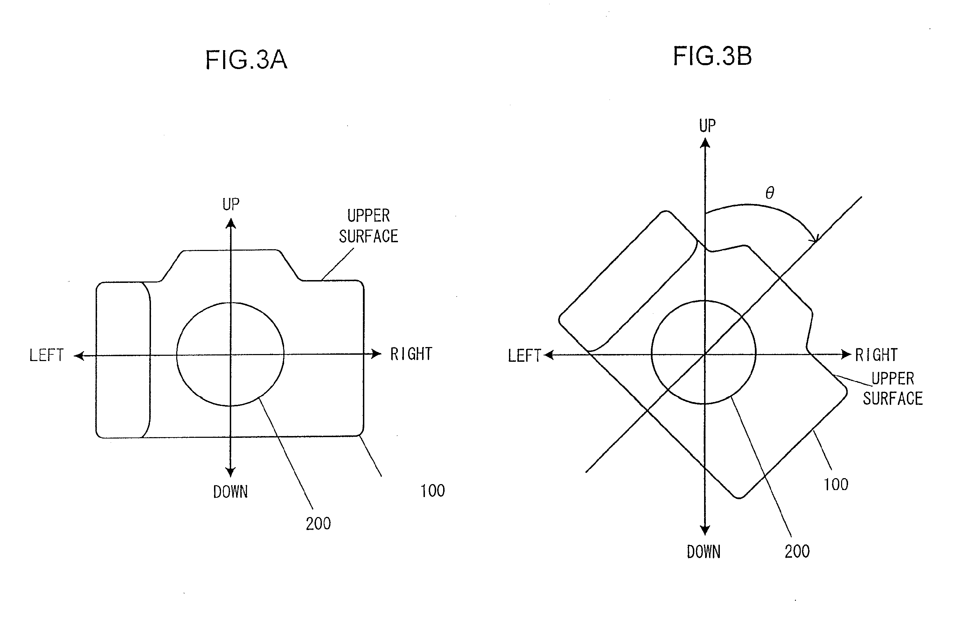

The CPU 12 calculates the tilt angle θ of the camera body 100 when the image of the photographic subject is captured by the image sensor 2, on the basis of the signal that is outputted from the tilt sensor 14. For this tilt angle θ, a reference angle and a rotational direction are prescribed in the following manner. As shown in Fig. 3A, with the optical axis of the photographic lens 200 when the upper surface of the camera body 100 is pointing directly upwards being taken as a central axis, the rotational angle that specifies the attitude of the camera body 100 (hereinafter termed the "tilt angle") is taken as the reference angle, and the tilt angle θ at this time is taken as being, for example, θ°. Furthermore, as shown in Fig. 3B, the rotational direction may be prescribed so that the tilt angle θ is positive when the camera has been rotated from the reference angle in, for example, the clockwise direction when seen from the front surface of the camera body 100.

The tilt angle θ of the camera body 100 that has been calculated by the CPU 12 in the manner described above is included in the EXIF data, and is recorded as a single image file upon the recording medium 11, along with the image data that has been subjected to compression processing by the compression and expansion circuit 7. Here, the image data is recorded in the region that is prescribed by the EXIF standard for recording such image data (hereinafter termed the "image data recording region"), and the data for the tilt angle θ of the camera body 100 is recorded in that region, among the regions in which the EXIF data is stored, that is the arbitrary region described above.

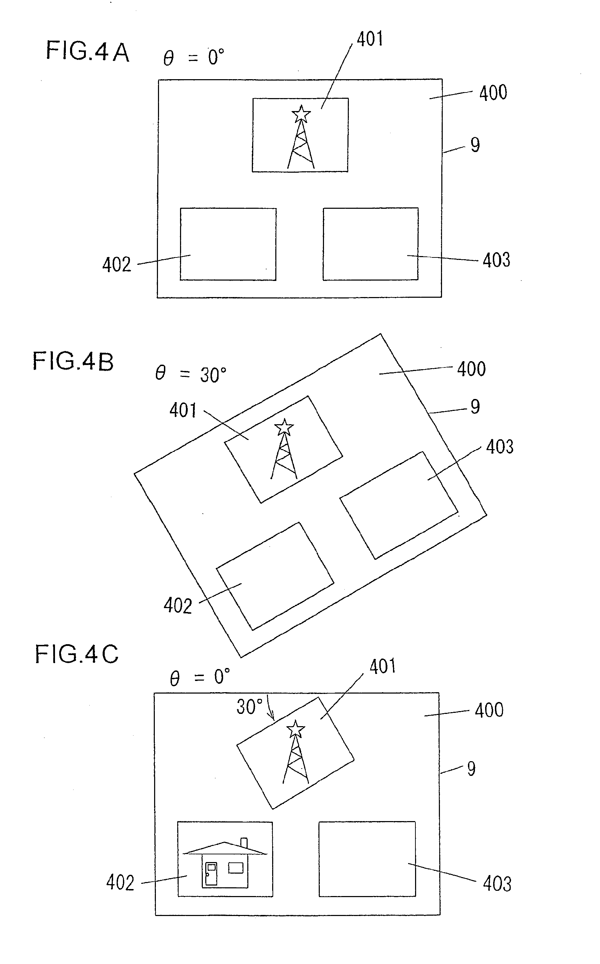

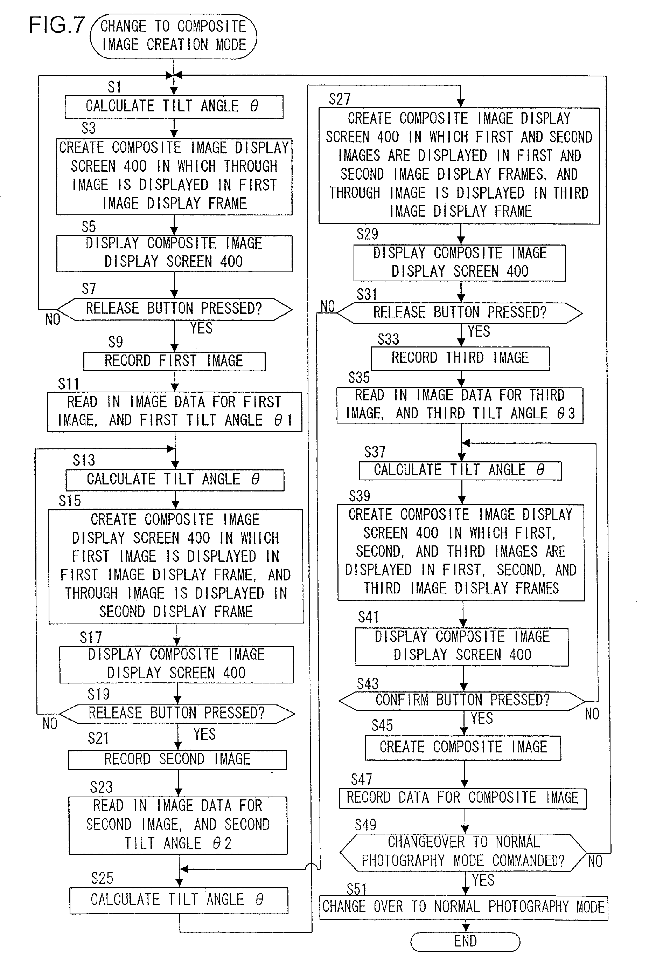

In this embodiment, it is possible to create a single composite image in which three images can be displayed simultaneously upon a single screen, laid out with their vertical directions aligned. In the following, this shall be explained in detail with reference to Figs. 4A through 4C, Figs. 5A and 5B, Figs. 6A and 6B, and also Fig. 7.

Figs. 4A through 4C, 5A and 5B, and 6A and 6B show examples of screens that are displayed upon the display device 9 from when an image of the photographic subject is captured, until a composite image is created. And Fig. 7 is a flow chart showing composition image creation processing that is executed by the CPU 12. In this embodiment, when a mode changeover switch not shown in the figures is actuated and the CPU 12 is commanded to change over to the composition image creation mode, then a program is started to perform the composite image creation processing shown in the flow chart of Fig. 7. The CPU 12 calculates the tilt angle θ of the camera body 100 from the output value of the tilt sensor 14 (a step S1), creates a composite image display screen 400 like the one shown in Fig. 4A (a step S3), and controls the various sections of the camera so as to display this image upon the display device 9 (a step S5).

A first image display frame 401, a second image display frame 402, and a third image display frame 403 are displayed upon the composite image display screen 400 shown in Fig. 4A. Before the images that are to constitute the basis for creation of the composite image are obtained (i.e. before the first photograph is taken), a through image is displayed in the first image display frame 401, while only the display frames for the second image display frame 402 and the third image display frame 403 are displayed. This through image is an image preparatory to photography, that, as shall be described hereinafter, is repeatedly acquired by the image sensor 2 at the stage preliminary to taking the main photograph.

When the camera body 100 is tilted in this state, as shown in Fig. 4B, as seen from the point of view of the user, the composite image display screen 400 is tilted along with the display device 9, in other words along with the camera body 100 (a negative decision in the step S7, and the steps S1 through S5). And the various image display frames 401 through 403 within the image display screen 400 are also tilted in a similar manner. If the camera body 100 is thought of as being a reference, then, irrespective of the tilt angle θ of the camera body 100, the composite image display screen 400 and the various image display frames 401 through 403 are not tilted with respect to the display device 9.

At this time, the image of the photographic subject in the through image that is displayed in the first image display frame 401 is always kept erect, irrespective of the tilt angle of the camera body 100, in a similar manner to the case when a through image is being displayed upon a display device by a prior art camera. In other words, the top of the through image of the photographic subject is displayed as oriented directly upwards, so as to agree with the actual direction of the vertical of the photographic subject, while its bottom is displayed as oriented directly vertically downwards (refer to Fig. 4B). To put this in another manner, when the camera body 100 has been tilted, although the first image display frame 401 tilts along with the camera body 100, from the point of view of a user who does not move his head, the through image of the photographic subject is not tilted. In the following explanation, the fact that the vertical direction in an image of the photographic subject that is being displayed upon the display device 9 and the actual direction of the vertical of the photographic subject agree with one another, shall be expressed by saying that this image is being displayed in an erect manner. Fig. 4B shows a situation in which the tilt angle θ is equal to 30°, in other words, a situation in which the camera body 100 has been tilted in the anticlockwise direction by 30° when the display device 9 is being viewed from the rear surface side of the camera body 100.

As shown in Fig. 4B, when the tilt angle θ is equal to 30°, and when the release button 104 is pressed so as to command the start of shutter release (an affirmative decision in the step S7), in other words when photography is performed for the first time, then, as described above, the CPU 12 controls the various sections of the camera (a step S9) so as to capture an image of the photographic subject, so as to record its image data in the image data recording region, and so as to record data specifying the tilt angle θ of the camera body 100 in the arbitrary region. Thereafter, as shown in Fig. 4C, the CPU 12 creates a composite image display screen 400 so as to display the image that has been captured during this first episode of photography (i.e. the first image) within the first image display frame 401, and so as to display a through image in the second image display frame 402, and displays this composite image display screen 400 upon the display device 9.

At this time, irrespective of the tilt angle of the camera body 100, the CPU 12 creates the composite image display screen 400 so as always to display the first image as being erect. In concrete terms, the CPU 12 reads out the image data for the first image from the image data recording region, and reads out the data for its tilt angle θ (the first image tilt angle θ1) from the arbitrary region (a step S11). And the CPU 12 calculates the current tilt angle θ of the camera body 100 at this time on the basis of the signal value that is outputted from the tilt sensor 14 (a step S13). Moreover, the CPU 12 creates the composite image display screen 400 so that the first image (in other words, the frame 401 of the first image) is rotated, in the clockwise direction within the composite image display screen 400, by just an angle (θ - θ1) that is obtained by subtracting the first image tilt angle θ1 from the current tilt angle θ of the camera body 100 (a step S15).

If, as shown for example in Fig. 4B, the first image has been obtained when the current tilt angle θ of the camera body 100 is 30°, then the first image tilt angle θ1 becomes 30°. Thus if, as shown in Fig. 4C, the current tilt angle θ of the camera body 100 is 0°, then the first image frame 401 with the first image is rotated by just θ - θ1 (= -30°) in the clockwise direction within the composite image display screen 400; in other words, the first image is displayed within the composite image display screen 400 as being rotated through 30° in the anticlockwise direction (steps S15 and S17).

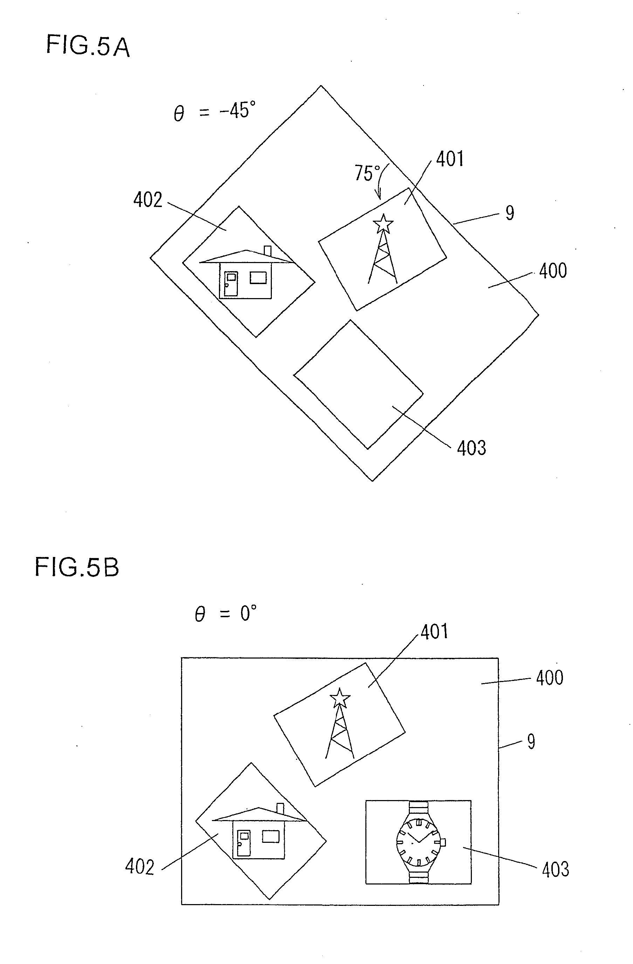

On the other hand if, as shown in Fig. 5A, the current tilt angle θ of the camera body 100 is -45°, then the first image frame 401 with the first image is rotated by just θ - θ1 (= -75°) in the clockwise direction within the composite image display screen 400; in other words, the first image is displayed within the composite image display screen 400 as being rotated through 75° in the anticlockwise direction. By doing this, the first image is always displayed as being erect within the composite image display screen 400, irrespective of the tilt angle of the camera body 100.

With regard to the through image that is being displayed within the second image display frame 402, in a similar manner to the case of the through image that was being displayed within the first image display frame 401 before the first image was obtained, although, as seen from the point of view of the user, the second image display frame 402 itself rotates along with the camera body 100, the through image of the photographic subject is always displayed as being erect (steps S15 and S17), irrespective of the tilt angle of the camera body 100 (refer to Figs. 4C and 5A). According to change of the tilt angle θ of the camera body 100, the CPU 12 creates the composite image display screen 400 while changing the display positions and the sizes of the image display frames 401 through 403 as appropriate, so that the various image display frames 401 through 403 do not mutually interfere with one another, and also so that they are confined within the composite image display screen 400 (a negative decision in the step S19, and in the steps S13 through S17).

When, as shown in Fig. 5A, the tilt angle θ is -45°, and when the release button 104 is pressed to issue a release start command (an affirmative decision in a step S19), in other words when photography is performed for the second time, then, as described above, the CPU 12 controls the various sections of the camera (a step S21) so as to capture an image of the photographic subject, so as to record its image data in the image data recording region, and so as to record data specifying the tilt angle θ of the camera body 100 in the arbitrary region. Thereafter, as shown in Fig. 5B, the CPU 12 creates a composite image display screen 400 so as to display the above described first image within the first image display frame 401, so as to display the image that has been captured during this second episode of photography (i.e. the second image) within the second image display frame 402, and so as to display a through image in the third image display frame 403, and displays this composite image display screen 400 upon the display device 9.

And, in a similar manner to the case with the first image described above, irrespective of the tilt angle θ of the camera body 100, the CPU 12 creates the composite image display screen 400 so as always to display the first and second images as being erect. In concrete terms, for the first image, the CPU 12 rotates the first image frame 401 within the composite image display screen 400 as described above (steps S25 through S29) . And, for the second image, the CPU 12 reads out its image data from the image data recording region, and reads out the data for its tilt angle θ (the second image tilt angle θ2) from the arbitrary region (a step S23). And the CPU 12 calculates the current tilt angle θ of the camera body 100 at this time on the basis of the signal value that is outputted from the tilt sensor 14 (a step S25). Moreover, the CPU 12 creates the composite image display screen 400 so that the second image (in other words, the frame 402 of the second image) is rotated, in the clockwise direction within the composite image display screen 400, by just an angle (θ - θ2) that is obtained by subtracting the second image tilt angle θ2 from the current tilt angle θ of the camera body 100 (a step S27).

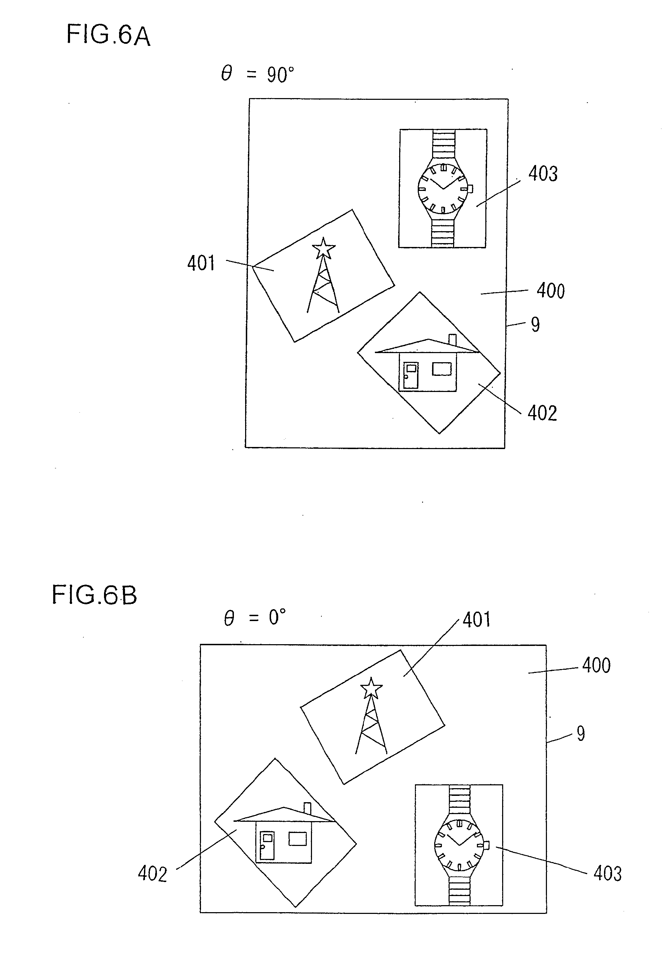

With regard to the through image that is being displayed within the third image display frame 403, in a similar manner to the cases described above, although, as seen from the point of view of the user, the third image display frame 403 itself rotates along with the camera body 100, nevertheless the through image of the photographic subject is always displayed as being erect (steps S27 and S29), irrespective of the tilt angle of the camera body 100 (refer to Figs. 5B and 6A).

Next when, as shown in Fig. 6A, the tilt angle θ is 90°, and when the release button 104 is pressed to issue a release start command (an affirmative decision in a step S31), in other words when photography is performed for the third time, then, as described above, the CPU 12 controls the various sections of the camera (a step S33) so as to capture an image of the photographic subject, so as to record its image data in the image data recording region, and so as to record the tilt angle θ of the camera body 100 in the arbitrary region. Thereafter, as shown in Fig. 6B, the CPU 12 creates a composite image display screen 400 so as to display the above described first image within the first image display frame 401, so as to display the above described second image within the second image display frame 402, and so as to display the image that has been captured during this third episode of photography (i.e. the third image) within the third image display frame 403, and displays this composite image display screen 400 upon the display device 9.

And, irrespective of the tilt angle θ of the camera body 100, the CPU 12 always creates the composite image display screen 400, and displays it upon the display device 9, so as to display the first, second, and third images as being erect. In concrete terms, for the first and second images, the CPU 12 rotates the first and second image frames 401 and 402 within the composite image display screen 400 as described above (steps S37 through S41). And, for the third image, the CPU 12 reads out its image data from the image data recording region, and reads out the data for its tilt angle θ (the third image tilt angle θ3) from the arbitrary region (a step S35). And the CPU 12 calculates the current tilt angle θ of the camera body 100 at this time on the basis of the signal value that is outputted from the tilt sensor 14 (a step S37). Moreover, the CPU 12 creates the composite image display screen 400 so that the third image (in other words, the frame 403 of the third image) is rotated, in the clockwise direction within the composite image display screen 400, by just an angle (θ - θ3) that is obtained by subtracting the third image tilt angle θ3 from the current tilt angle θ of the camera body 100 (a step S39).

If, for example, the tilt angle θ of the camera body 100 is 90°, then a composite image display screen 400 like that shown in Fig. 6A is created and is displayed upon the display device 9 (a step S41). Moreover, if the tilt angle of the camera body 100 is 0°, then a composite image display screen 400 like that shown in Fig. 6B is created and is displayed upon the display device 9.

Here, when the confirm button 105 is pressed (an affirmative decision in the step S43), then the CPU 12 creates one single set of image data that is laid out according to the layout of the composite image display screen 400 that is being created at the time point that the confirm button 105 is pressed, and records this image data upon the recording medium 11 according to the EXIF standard. In other words, when the confirm button 105 is pressed, on the basis of the tilt angle θ of the camera body 100 at this time point, the CPU 12 creates a single composite image in which the first through the third images are respectively rotated in the clockwise direction by just (θ - θ1), (θ - θ2), and (θ - θ3), and moreover so that they do not mutually overlap one another (a step S45). And the CPU 12 records the data for this composite image upon the recording medium 11 separately from the data for the first through the third images (a step S47).

By the above, a single image (a composite image) is obtained, in which it is possible to display three images simultaneously upon one single screen, laid out with their vertical directions coinciding. If the composite image creation mode is to be continued without change (a negative decision in a step S49), then the CPU 12 controls the various sections of the camera so as to display the composite image display screen 400 for a second time upon the display device 9, as shown in Fig. 4A, and so as to return to the state in which it is possible to create a composite image (the steps S1 through S5). However, if the mode changeover switch not shown in the figures is actuated and the CPU 12 is commanded to change over to the normal photography mode (an affirmative decision in the step S49), then the CPU 12 controls the various sections of the camera so as to return to a state before shutter release, similar to that in the case of a conventional camera (a step S51). Since the subsequent processing by the CPU 12 is similar to that in the case of a prior art camera, detailed explanation thereof shall be omitted.

With the camera of the first embodiment described above, the following beneficial operational effects are obtained.
(1) It is arranged to create the composite image display screen 400 so as to display all of the first through the third images as being erect. By doing this, it is possible to obtain a composite image (a composite photograph) in which several images are arranged with their vertical directions coinciding, so that it is possible to ensure that the person who views this composite image does not experience any feeling of difference.
(2) It is arranged for the display frame of the through image to be displayed while tilting it along with the tilting of the camera body 100, so that the through image of the photographic subject is displayed as being erect. By doing this, it is possible to determine the composition in a similar manner to what is done when performing photography with a conventional camera, and accordingly no sense of difference is imparted to the user. Moreover since it is possible for the user, by looking at the composite image display screen 400 while tilting the camera body 100, to perform photography while performing comparison of the image that is already being obtained with the composition that he desires, and so on, accordingly the user is able to obtain his intended composition in a simple and easy manner.
(3) Since it is arranged to record the data for the composite image as one single image according to the EXIF standard, and since accordingly it is possible to read in and display this data for the composite image even upon some other device such as a personal computer or an image display device or the like, therefore the general usability is high, and the convenience is enhanced.
(4) It is arranged to record the data for the composite image upon the recording medium 11 separately from the data for the first image through the third image, and thus not to delete the data for the first image through the third image, but rather to keep it. By doing this it becomes possible to utilize the first image through the third image individually, and accordingly the convenience of use is enhanced.

### --- Second Embodiment ---

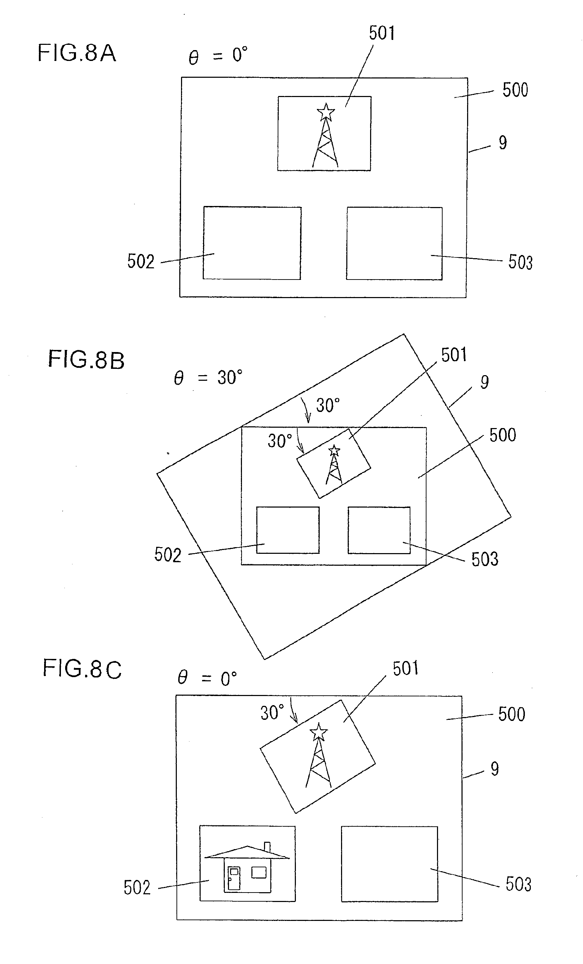

A second embodiment of the present invention shall be explained with reference to Figs. 8 through 11. In the following explanation, to structural elements that are the same as ones of the first embodiment described above, the same reference symbols are appended, and the explanation shall concentrate upon the points of difference. Aspects that are not particularly explained are the same as in the first embodiment. This embodiment principally differs from the first embodiment, in the feature that the composite image display screen is itself displayed as being erect. This shall be explained in detail in the following.

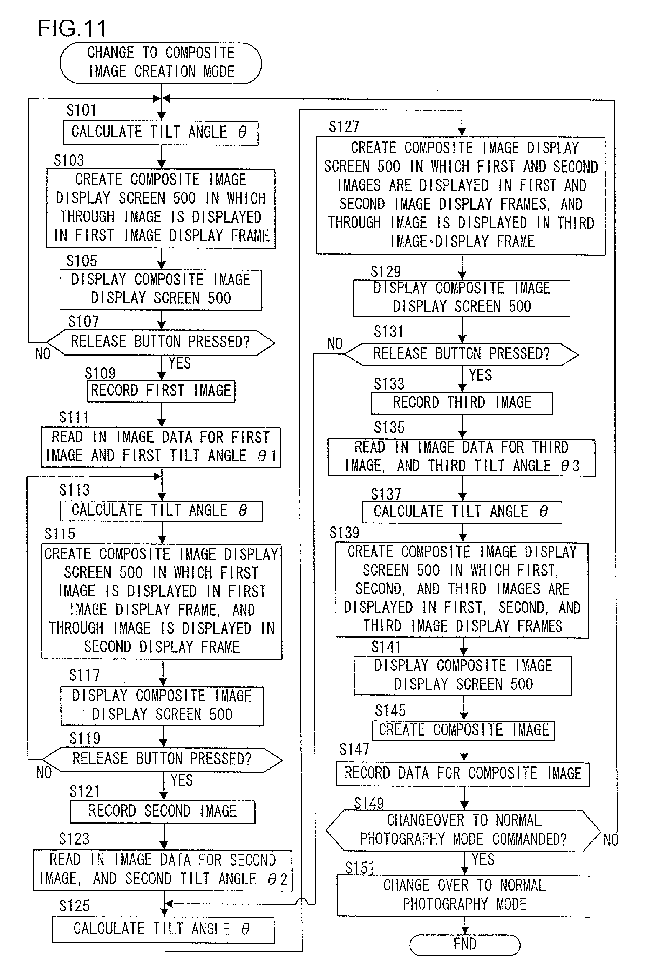

Figs. 8 through 10 show examples of screens that are displayed upon the display device 9 from when an image of the photographic subject is captured, until a composite image is created; and Fig. 11 is a flow chart showing composition image creation processing that is executed by the CPU 12. In this embodiment, when the mode changeover switch not shown in the figures is actuated and the CPU 12 is commanded to change over to the composition image creation mode, then a program is started to perform the composite image creation processing shown in the flow chart of Fig. 11. The CPU 12 calculates the tilt angle θ of the camera body 100 from the output value of the tilt sensor 14 (a step S101), creates a composite image display screen 500 like the one shown in Fig. 8A (a step S103), and controls the various sections of the camera so as to display this image upon the display device 9 (a step S105).

A first image display frame 501, a second image display frame 502, and a third image display frame 503 are displayed upon the composite image display screen 500 shown in Fig. 8A. Before the images that are to constitute the basis for creation of the composite image are obtained (i.e. before the first photograph is taken), a through image is displayed in the first image display frame 501, while only the display frames for the second image display frame 502 and the third image display frame 503 are displayed.

When the camera body 100 is tilted in this state (a negative decision in the step S107), then, as shown in Fig. 8B, then the composite image display screen 500 is displayed upon the display device 9 as being erect. It shouldbe understood that the first image display frame 501 within the composite image display screen 500 is also tilted along with the display device 9, in other words along with the camera body 100 (steps S101 through S105). If the camera body 100 is thought of as being a reference, then, irrespective of the tilt angle θ of the camera body 100, the first image display frames 501 is not tilted with respect to the display device 9. At this time, the through image of the photographic subject that is displayed in the first image display frame 501 is always kept erect, irrespective of the tilt angle of the camera body 100, in a similar manner to the case when a through image is being displayed upon a display device by a prior art camera. It should be understood that Fig. 8B shows the situation when the tilt angle θ is equal to 30°.

In concrete terms, the CPU 12 calculates the current tilt angle θ of the camera body 100 at this time on the basis of the signal value that is outputted from the tilt sensor 14 (a step S101). Moreover, the CPU 12 creates the composite image display screen 500 so that, within this composite image display screen 500, the first image display frame 501 and the through image that is displayed within this first image display frame 501 are rotated in the anticlockwise direction by just the tilt angle θ that has been calculated (a step S103) . And the CPU 12 rotates the composite image display screen 500 in the clockwise direction by just the tilt angle that has been calculated, and displays this screen 500 upon the display device 9 (a step S105). Moreover, when rotating the composite image display screen 500 in the clockwise direction by just the tilt angle that has been calculated, the CPU 12 changes the size of the composite image display screen 500 as appropriate, so that it is possible to display the entire composite image display screen 500 upon the display device 9 (a step S105).

As shown in Fig. 8B, when the tilt angle θ is equal to 30°, the CPU 12 creates a composite image display screen 500 in which, within the composite image display screen 500, the first image display frame 501 and the through image that is being displayed in this first image display frame are rotated by just 30° in the anticlockwise direction. And, having rotated the composite image display screen 500 by just 30° in the clockwise direction, the CPU 12 then reduces the size of the composite image display screen 500 so that it is possible for this entire composite image display screen 500 to be displayed upon the display device 9, and then displays this screen 500 upon the display device 9. As a result, although the camera body 100 and the display device 9 are rotated through 30° in the anticlockwise direction when seen from the rear surface of the camera body 100, the composite image display screen 500 is displayed upon the display device 9 as being erect, since the composite image display screen 500 is being displayed as rotated through 30° in the clockwise direction with respect to the display device 9.

Since the first image display frame 501 and the through image that is being displayed in this first image display frame 501 are displayed as being rotated through just 30° in the anticlockwise direction with respect to the composite image display screen 500, accordingly they come to be displayed in the same manner as if the rotation in the clockwise direction of the composite image display screen 500 with respect to the display device 9 were to be canceled. In other words, the first image display frame 501 and the through image that is being displayed in this first image display frame 501 are displayed in the state in which they have been tilted along with the display device 9, in other words along with the camera body 100. Thus, the through image of the photographic subject that is being displayed in the first image display frame 501 is displayed as being in the erect state.

When, as shown in Fig. 8B, the tilt angle θ is equal to 30°, and when the release button 104 is pressed (an affirmative decision in the step S107), in other words when photography is performed for the first time, then, as described above, the CPU 12 controls the various sections of the camera (a step S109) so as to capture an image of the photographic subject, so as to record its image data in the image data recording region, and so as to record data specifying the tilt angle θ of the camera body 100 in the arbitrary region. Thereafter, as shown in Fig. 8C, the CPU 12 creates a composite image display screen 500 so as to display the image that has been captured during this first episode of photography (i.e. the first image) within the first image display frame 501, and so as to display a through image in the second image display frame 502, and displays this composite image display screen 500 upon the display device 9.

At this time, irrespective of the tilt angle of the camera body 100, the CPU 12 creates the composite image display screen 500 so as always to display the composite image display screen 500 as being erect. And the CPU 12 creates the composite image display screen 500 so as always to display the first image as being erect. In concrete terms, the CPU 12 reads out the image data for the first image from the image data recording region, and reads out the data for its tilt angle θ (the first image tilt angle θ1) from the arbitrary region (a step S111). And the CPU 12 creates the composite image display screen 500 so that the first image (in other words, the frame 501 of the first image) is rotated, in the anticlockwise direction within the composite image display screen 500, by just the first image tilt angle θ1 (a step S115). And the CPU 12 calculates the current tilt angle θ of the camera body 100 (a step S113), and displays the composite image display screen 500 upon the display device 9 as being rotated in the clockwise direction by just the tilt angle θ that has been calculated (a step S117).

If, as shown for example in Fig. 8B, the first image has been obtained when the current tilt angle θ of the camera body 100 is 30°, then the first image tilt angle θ1 becomes 30°. Thus if, as shown in Fig. 8C, the current tilt angle θ of the camera body 100 is 0°, then the first image is displayed within the composite image display screen 500 as being rotated by just θ1 = 30° in the anticlockwise direction (steps S115 and S117). Since at this time, as described above, the composite image display screen 500 is itself displayed as being erect, accordingly the first image (i.e. the first image frame 501) is observed, from the point of view of the user, in the state of being rotated by 30° in the anticlockwise direction. The first image is an image obtained by photography when the tilt angle θ of the camera body 100 is θ = 30°, in other words, in the state in which the camera body 100 is tilted by 30° in the anticlockwise direction as seen from the point of view of the user (i.e. from the rear surface of the camera body 100). Accordingly, by the first image being displayed as described above, the first image comes to be displayed as being erect.

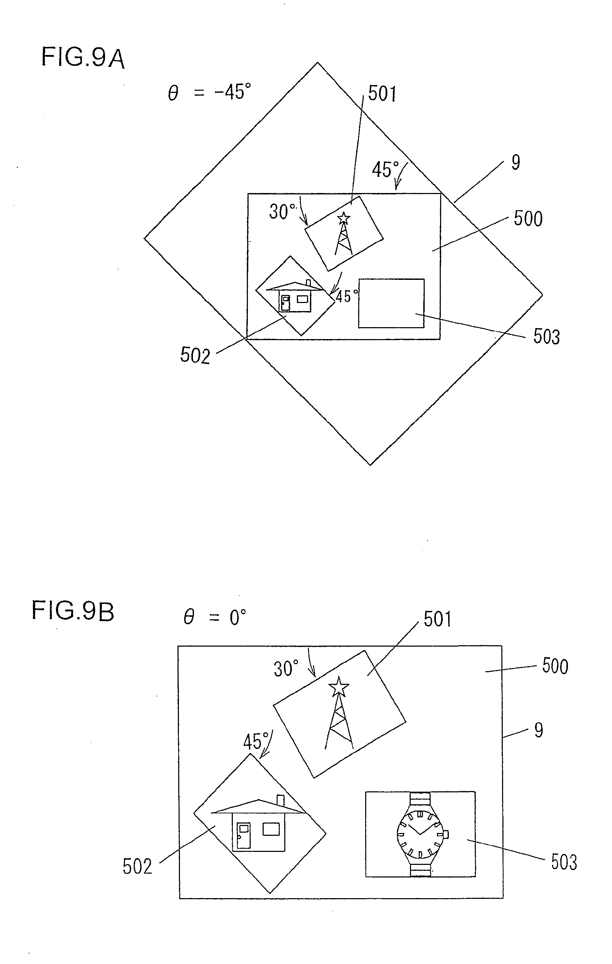

On the other hand even if, as shown in Fig. 9A, the current tilt angle θ of the camera body 100 is -45°, then since, as described above, the composite image display screen 500 itself is being displayed as being erect, accordingly the first image (and the first image frame 501) are observed, from the point of view of the user, in the state of having been rotated through 30° in the anticlockwise direction. Accordingly, the first image always comes to be displayed as being erect.

With regard to the through image that is being displayed within the second image display frame 502, in a similar manner to the case of the through image that was being displayed within the first image display frame 501 before the first image was obtained, although, as seen from the point of view of the user, the second image display frame 502 itself rotates along with the camera body 100, the through image of the photographic subject is always displayed as being erect (steps S115 and S117), irrespective of the tilt angle of the camera body 100 (refer to Figs. 8C and 9A). According to change of the tilt angle θ of the camera body 100, the CPU 12 creates the composite image display screen 500 while changing the display positions and the sizes of the image display frames 501 through 503 as appropriate, so that the various image display frames 501 through 503 do not mutually interfere with one another, and also so that they are confined within the composite image display screen 500 (a negative decision in the step S119, and in the steps S113 through S117).

Next when, as shown in Fig. 9A, the tilt angle θ is -45°, and when the release button 104 is pressed to issue a release start command (an affirmative decision in a step S119), in other words when photography is performed for the second time, then, as described above, the CPU 12 controls the various sections of the camera (a step S121) so as to capture an image of the photographic subject, so as to record its image data in the image data recording region, and so as to record data specifying the tilt angle θ of the camera body 100 in the arbitrary region. Thereafter, as shown in Fig. 9B, the CPU 12 creates a composite image display screen 500 so as to display the above described first image within the first image display frame 501, so as to display the image that has been captured during this second episode of photography (i.e. the second image) within the second image display frame 502, and so as to display a through image in the third image display frame 503, and displays this composite image display screen 500 upon the display device 9.

And, irrespective of the tilt angle θ of the camera body 100, the CPU 12 creates the composite image display screen 500 so as always to display the first and second images as being erect. In concrete terms, the CPU 12 rotates the first image within the composite image display screen 500 as described above (steps S125 through S129). And, for the second image, the CPU 12 reads out its image data from the image data recording region, and reads out the data for its tilt angle θ (the second image tilt angle θ2) from the arbitrary region (a step S123). And the CPU 12 creates the composite image display screen 500 so that the second image (in other words, the frame 502 of the second image) is rotated, in the anticlockwise direction within the composite image display screen 500, by just the second image tilt angle θ2 (a step S127).

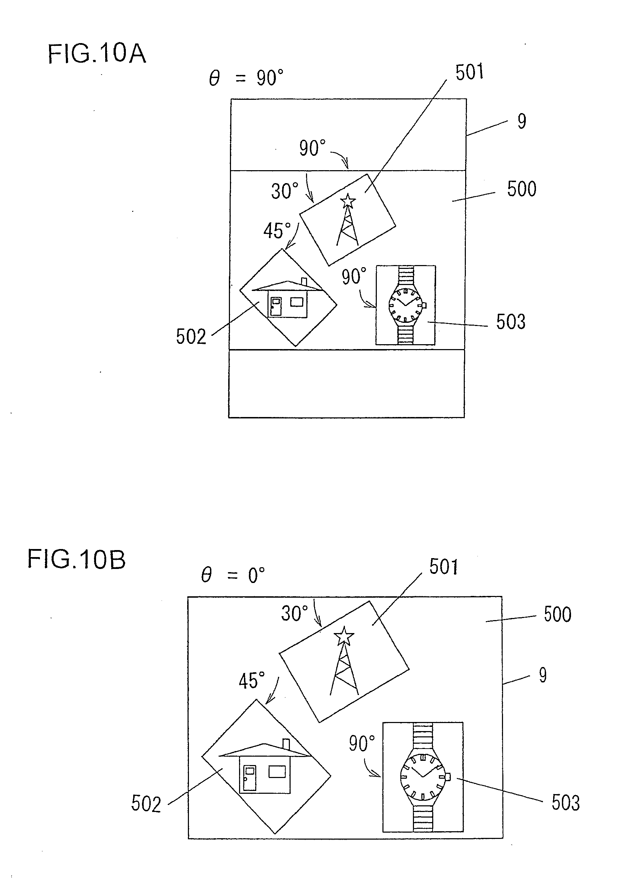

With regard to the through image that is being displayed within the third image display frame 503, in a similar manner to the cases described above, although, as seen from the point of view of the user, the third image display frame 503 itself rotates along with the camera body 100, nevertheless the through image of the photographic subject is always displayed as being erect (steps S127 and S129), irrespective of the tilt angle of the camera body 100 (refer to Figs. 9B and 10A). And the CPU 12 calculates the current tilt angle θ of the camera body 100 (a step S125), and rotates the composite image display screen 500 upon the display device 9 in the clockwise direction by just this tilt angle θ that has been calculated (a step S129).

Next when, as shown in Fig. 10A, the tilt angle θ is 90°, and when the release button 104 is pressed to issue a release start command (an affirmative decision in a step S131), in other words when photography is performed for the third time, then, as described above, the CPU 12 controls the various sections of the camera (a step S133) so as to capture an image of the photographic subject, so as to record its image data in the image data recording region, and so as to record the tilt angle θ of the camera body 100 in the arbitrary region. Thereafter, as shown in Fig. 10B, the CPU 12 creates a composite image display screen 500 so as to display the above described first image within the first image display frame 501, so as to display the above described second image within the second image display frame 502, and so as to display the image that has been captured during this third episode of photography (i.e. the third image) within the third image display frame 503, and displays this composite image display screen 500 upon the display device 9.

And, irrespective of the tilt angle θ of the camera body 100, the CPU 12 always creates the composite image display screen 500 as described above. The CPU 12 creates the composite image display screen 500 so as to display each of the first, second, and third images as being erect. In concrete terms, the CPU 12 rotates the first and second images within the composite image display screen 400 as described above (steps S137 through S139) . And, for the third image, the CPU 12 reads out its image data from the image data recording region, and reads out the data for its tilt angle θ (the third image tilt angle θ3) from the arbitrary region (a step S135). Moreover, the CPU 12 creates the composite image display screen 500 so as to rotate the third image (and the third image frame 503) in the anticlockwise direction within the composite image display screen 500 by just this third image tilt angle θ3 (the step S139). And the CPU 12 calculates the current tilt angle θ of the camera body 100 at this time (a step S137), rotates the composite image display screen 500 in the clockwise direction by just this tilt angle θ that has been calculated, and displays this screen 500 upon the display device 9 (a step S141).

If, for example, the tilt angle θ of the camera body 100 is 90°, then a composite image display screen 500 like that shown in Fig. 10A is created and is displayed upon the display device 9. Moreover, if the tilt angle of the camera body 100 is 0°, then a composite image display screen 500 like that shown in Fig. 10B is created and is displayed upon the display device 9.

A feature by which this second embodiment differs from the first embodiment described above is that, when all of the first image through the third image have been obtained, the tilt angles of the first image through the third image with respect to the composite image display screen 500, in other words the layout of the upward directions of the composite image display screen 500, does not change, irrespective of the tilt angle θ of the camera body 100. Accordingly, in this embodiment, when all of the first image through the third image have been obtained, the CPU 12 creates a single set of image data following the layout of the composite image display screen 500, and records this image data upon the recording medium 11 according to the EXIF standard. In other words, the CPU 12 rotates the first image through the third image in the anticlockwise direction by θ1, θ2, and θ3 respectively, and creates a single image (the composite image) so that they do not mutually overlap (a step S145). And the CPU 12 records the data for this composite image upon the recording medium 11 separately from the data for the first image through the third image (a step S147).

By the above, a composite image is obtained. If the composite image creation mode is to be continued without change (a negative decision in a step S149), then the CPU 12 controls the various sections of the camera so as to display the composite image display screen 500 for a second time upon the display device 9, as shown in Fig. 8A, and so as to return to the state in which it is possible to create a composite image (the steps S101 through S105). However, if the mode changeover switch not shown in the figures is actuated and the CPU 12 is commanded to change over to the normal photography mode (an affirmative decision in the step S149), then the CPU 12 controls the various sections of the camera so as to return to a state before shutter release, similar to that in the case of a conventional camera (a step S151). Since the subsequent processing by the CPU 12 is similar to that in the case of a prior art camera, detailed explanation thereof shall be omitted.

With the camera of the second embodiment described above, in addition to the beneficial operational effects of the first embodiment described above, the further following beneficial operational effect is also obtained.
(1) It is arranged to display the composite image display screen itself as being erect, irrespective of the tilt angle θ of the camera body 100. Since, due to this, the layout of the composite image display screen becomes just as it appears to be, accordingly the user is able easily to determine the composition of the image.

### --- Variant Embodiments ---

(1) Although, in the above explanation, it is arranged for the data for the composite image to be recorded upon the recording medium separately from the data for the first image through the third image, the present invention is not to be considered as being limited by this feature. For example it would be acceptable, when recording the data for the composite image upon the recording medium 11, to arrange for the CPU 12 to control the various sections of the camera so as to delete the data for the first image through the third image from the recording medium 11. By doing this, it is possible to utilize the recording capacity of the recording medium 11 in an effective manner.
(2) Although, in the above explanation, the positions of the first image through the third image were determined in advance, the present invention is not limited by this. For example, it would also be acceptable to arrange for it to be possible to shift the first image through the third image to any individual desired positions, according to actuation by the user. The user may also be enabled to vary the individual sizes of the first image through the third image, and it would also be acceptable to arrange for him to be able to trim them. With regard to such variation of the positions and the sizes of these images, it would be acceptable to arrange for the details to be set in advance before photography, and for them to be reflected when photographing the first image through the third image; or it would also be acceptable to arrange for the user to be able to change these details as he desires, after photography of the first through the third images.
   It would also be acceptable to provide a structure with which, when the confirm button 105 is pressed for a short time period (for example for less than 0.5 seconds) after photography of the first image through the third image, then the display positions of the image through the third image are sequentially changed around each time the confirm button 105 is pressed, and with which, when the confirm button 105 is pressed for a longer time period (for example for 1 second or more), the display positions of the first image through the third image at this time are confirmed, and the data for the composite image is created. By arranging for the various sections of the camera to be controlled in this manner, so that the CPU 12 changes the layout of the composite image according to a command from the user, it is possible to increase the freedom of layout of the composite image, and to reflect the intentions of the user with regard to the layout of the composite image.
(3) Although, in the above explanation, the composite image was made up from three images, the number of images that make up the composite image is not particularly limited; it could be two, or four or more. And, although it was arranged to lay out the images that make up the composite image so that they did not mutually overlap one another, this is not limitative of the present invention; it would also be acceptable to arrange to lay out the images that make up the composite image so that portions of them overlap one another.
(4) Although, in the above explanation, it was arranged to record the data for one single composite image, the present invention is not to be considered as being limited by this feature. For example, it would also be acceptable to arrange to record, upon the recording medium 11, information related to the layout of the composite image display screen 400 or 500, and the data for the first image through the third image. Or, it would also be acceptable to arrange to read in such information about the layout from the recording medium 11, and to create the composite image from the data for the first image through the third image, on the basis of the layout information that has thus been read in.
(5) Although, in the above explanation, it was arranged to create the composite image during photography, the present invention is not to be considered as being limited by this feature. For example, it would also be acceptable to arrange to select any desired images, and to create a composite image, from data for images that have already been photographed, that has already been recorded upon the recording medium 11. In this case, it would be acceptable to arrange to create the composite image not by using the camera body 100, but by using some other external device (for example, a personal computer).
(6) Although, in the above explanation, it was arranged for the display angles of the first image through the third image within the composite image display screen 400, and the display angle of the composite image display screen 500, to change so as to track the tilt angle θ continuously, the present invention is not to be considered as being limited by this feature. For example it would also be acceptable to arrange for the display angles of the first image through the third image within the composite image display screen 400, and the display angle of the composite image display screen 500, not to change, if the amount of change of the tilt angle θ is less than some threshold value θa. Moreover it would also be acceptable for the display angles of the first image through the third image within the composite image display screen 400, and the display angle of the composite image display screen 500, to change discretely when the amount of change of the tilt angle θ is greater than or equal to n times some predetermined amount Δθ (where n is an integer), so that these display angles of the first image through the third image within the composite image display screen 400, and the display angle of the composite image display screen 500, only change by n times Δθ. For example it would be acceptable to arrange for the display angles of the first image through the third image within the composite image display screen 400, and the display angle of the composite image display screen 500, to change by only twice Δθ, when the amount of change of the tilt angle θ should have become 2.6 times the predetermined amount Δθ; or for the display angles of the first image through the third image within the composite image display screen 400, and the display angle of the composite image display screen 500, to change by only four times Δθ, when the amount of change of the tilt angle θ should have become 4.1 times the predetermined amount Δθ.
(7) Although, in the above explanation, the camera is a so called single lens reflex type camera, it could also be a so called compact camera.
(8) The above embodiments and variant embodiments could also be combined together in various ways.

The above described embodiments are examples, and various modifications can be made without departing from the scope of the invention.

## Claims

1. A camera, comprising:
an image-capturing means that captures an image of a photographic subject created by a photographic lens, creates an image to be recorded when a release start command is issued, and creates a through image for composition confirmation before starting of the release;
a body in which the image-capturing means is disposed;
a tilt angle detection means that detects the tilt angle of the body about the optical axis of the photographic lens;
a composite image creationmeans that creates and outputs a composite image for display for displaying the through image and the image to be recorded in a single screen; and
a display means that displays the composite image for display; wherein
the composite image creation means creates the composite image for display so that the photographic subj ect that appears in the image to be recorded is displayed upon the display means as being approximately erect.

2. A camera according to claim 1, wherein
the composite image creation means creates the composite image for display so that the orientation of a display frame for the through image that is displayed upon the display means does not change, having no relationship with the tilt angle, with respect to the display means.

3. A camera according to claim 1 or claim 2, wherein
the composite image creation means creates the composite image for display on the basis of the tilt angle, so that the through image of the photographic subjects is displayed upon the display means as being approximately erect.

4. A camera according to any one of claims 1 through 3, wherein
the composite image creation means creates a single composite image for recording on the basis of a plurality of images to be recorded, each of which is the image to be recorded, in which the photographic subjects appear as being approximately erect, and records data of the composite image for recording upon a composite image data recording device.

5. A camera according to claim 4, further comprising:
a recording medium upon which data of the image to be recorded is recorded; and
a recording control means that controls recording of the data of the image to be recorded upon the recording medium, and controls recording of the data of the composite image for recording upon the composite image data recording device; wherein
the recording control means does not delete the data of the image to be recorded from the recording medium, when the data of the composite image for recording is recorded upon the composite image data recording device.

6. A camera according to claim 4, further comprising:
a recording medium upon which data of the image to be recorded is recorded; and
a recording control means that controls recording of the data of the image to be recorded upon the recording medium, and controls recording of the data of the composite image for recording upon the composite image data recording device; wherein
the recording control means deletes the data of the images to be recorded from the recording medium, when the data of the composite image for recording is recorded upon the composite image data recording device.

7. A camera according to any one of claims 4 through 6, further comprising
a layout alteration means that alters the layout of the composite image for recording; wherein
the composite image creation means records the data of the composite image for recording upon the composite image data recording device, with its layout altered by the layout alteration means.
